**Europäisches Patentamt**

**European Patent Office**

**Office européen des brevets**

(19)

(11) Numéro de publication: **0 133 091**

**A1**

(12)

# DEMANDE DE BREVET EUROPEEN

(21) Numéro de dépôt: **84401468.8**

(22) Date de dépôt: **10.07.84**

(51) Int. Cl.⁴: **B 23 C 3/35**

(30) Priorité: **13.07.83 FR 8312023**

(43) Date de publication de la demande:
**13.02.85 Bulletin 85/7**

(84) Etats contractants désignés:
**CH DE FR IT LI**

(71) Demandeur: **Société Anonyme H.K. FRANCE
94, Boulevard Richard Lenoir
F-75011 Paris(FR)**

(72) Inventeur: **Kinas, Henry
20, Boulevard Jean Mermoz
F-92200 Neuilly S/Seine(FR)**

(74) Mandataire: **Boivin, Claude
9, rue Edouard-Charton
F-78000 Versailles(FR)**

(54) Procédé pour réaliser une clef dont on connaît le numéro ou code et machine pour la mise en oeuvre de ce procédé.

(57) On met en mémoire la ou les images des différents crans que peuvent comporter les clefs à reproduire et les écarts entre ces crans; à partir de cette ou ces images ainsi mises en mémoire, on réalise une superposition d'images de crans en nombre égal à celui des crans à former dans l'ébauche, la superposition étant effectuée en disposant ces images de crans en fonction de la combinaison à réaliser de façon que leur ensemble reproduise cette combinaison; on met en mémoire l'image de la clef ainsi formée; et on commande le déplacement relatif de la fraise et du porteébauche de façon à assurer un balayage continu de l'ébauche, en fonction du contour de l'image ainsi mise en mémoire.

Pour mettre en oeuvre ce procédé, on utilise une machine comportant outre un porte-ébauche (18), une fraise (12) et deux moteurs (16 et 17) pour déplacer le porte-ébauche et la fraise l'un par rapport à l'autre, une première memoire électronique (1) de la ou des images des crans à former dans l'ébauche, des moyens (3) pour superposer une série d'images de crans en nombre égal à celui de ces crans de facon que leur ensemble reproduise la combinaison à réaliser, et forme l'image correspondante de la clef, une deuxième mémoire électronique (4) de l'image de la clef ainsi obtenue, et des moyens (20) pour commander les deux moteurs (16 et 17) en assurant un balayage continu de l'ébauche en fonction du contour de l'image ainsi réalisée.

./...

EP 0 133 091 A1

FIG 1

- 1 -

Procédé pour réaliser une clef dont on connaît le numéro ou code
et machine pour la mise en oeuvre de ce procédé.

La présente invention concerne la réalisation automatique de
clefs dont on connaît le numéro ou code.

Il existe des machines à reproduire les clefs plates comportant
une fraise rotative et un palpeur, ces deux éléments pouvant être
déplacés simultanément dans deux directions orthogonales. Souvent
ces machines sont utilisées pour reproduire une clef dont on a le
modèle et qu'on fixe devant un palpeur. Dans ce cas, on balaie à
l'aide du palpeur les crans de la clef modèle; la fraise taille
alors dans une ébauche fixée devant elle des crans identiques à
ceux de la clef modèle.

Le brevet US 4,188,163 décrit une machine à reproduire les clefs
dont on connaît simplement le numéro ou code. Cette machine comporte un certain nombre de barrettes mobiles déterminant la profondeur des crans et leurs positions et devant lesquelles se déplace
un palpeur. La fraise a un profil correspondant à celui des crans
à tailler dans la clef et le palpeur, en se déplaçant devant les
barrettes, détermine la profondeur des divers crans à former dans
l'ébauche par la fraise.

Mais cette machine ne permet pas une réalisation automatique de la
clef par simple affichage du numéro de cette clef et il est nécessaire de changer de fraise à chaque modification du profil du cran.

·ésente invention a pour objet un procédé pour réaliser à
le d'une fraise une clef dont on connaît le numéro ou code,
une ébauche fixée dans un étau porte-ébauche, qui permet,
ntraire, une réalisation automatique par simple affichage
méro de la clef, sans qu'il soit nécessaire de changer de
ə, même si la clef ou les clefs à réaliser comportent des
de formes différentes.

Le p cédé selon l'invention dans lequel on utilise une fraise
ıniv selle, est caractérisé en ce qu'on met en mémoire la ou les
des différents crans que peuvent comporter les clefs à re-
re et les écarts entre ces crans, qu'à partir de la ou les
ainsi mises en mémoire, on réalise une superposition d'imacrans en nombre égal à celui des crans à former dans l'ébau-
a superposition étant effectuée en disposant ces images de
crar. en fonction de la combinaison à réaliser de façon que leur
le reproduise cette combinaison, qu'on met en mémoire l'imala clef ainsi formée, et qu'on commande le déplacement rela-
· la fraise et du porte-ébauche de façon à assurer un balayaıtinu de l'ébauche, en fonction du contour de l'image ainsi
en mémoire.

ention a également pour objet une machine pour la mise en
ze de ce procédé.

ə machine comporte un bâti, un chariot intermédiaire monté
ssant par rapport à ce bâti, dans une première direction, un
ot monté coulissant sur le chariot intermédiaire dans une
ème direction, un premier moteur pour déplacer le chariot
médiaire par rapport au bâti, un deuxième moteur pour déplaver le chariot par rapport au chariot intermédiaire, un support
de fraise par rapport auquel une fraise est montée à rotation,
es moyens pour entraîner la fraise, un porte-ébauche, l'un des
nts constitués par le support de fraise et le porte-ébauche
porté par le bâti et l'autre par le chariot, et est caracée en ce qu'elle comprend en outre, une première mémoire de
les images des crans à former dans l'ébauche, des moyens
superposer une série d'images de crans en nombre égal à ce-
e ces crans de façon que leur ensemble reproduise la combi-
n à réaliser et forme l'image correspondante de la clef, une
ème mémoire de l'image de la clef ainsi obtenue, et des
; pour commander les deux moteurs en assurant un balayage
ıu de l'ébauche en fonction du contour de l'image ainsi mise

en mémoire.                    0133091

On a décrit ci-après, à titre d'exemple non limitatif, un mode
de réalisation de la machine selon l'invention, avec référence
aux dessins annexés dans lesquels :

La Figure 1 représente un exemple de clef et les images
de ces crans;

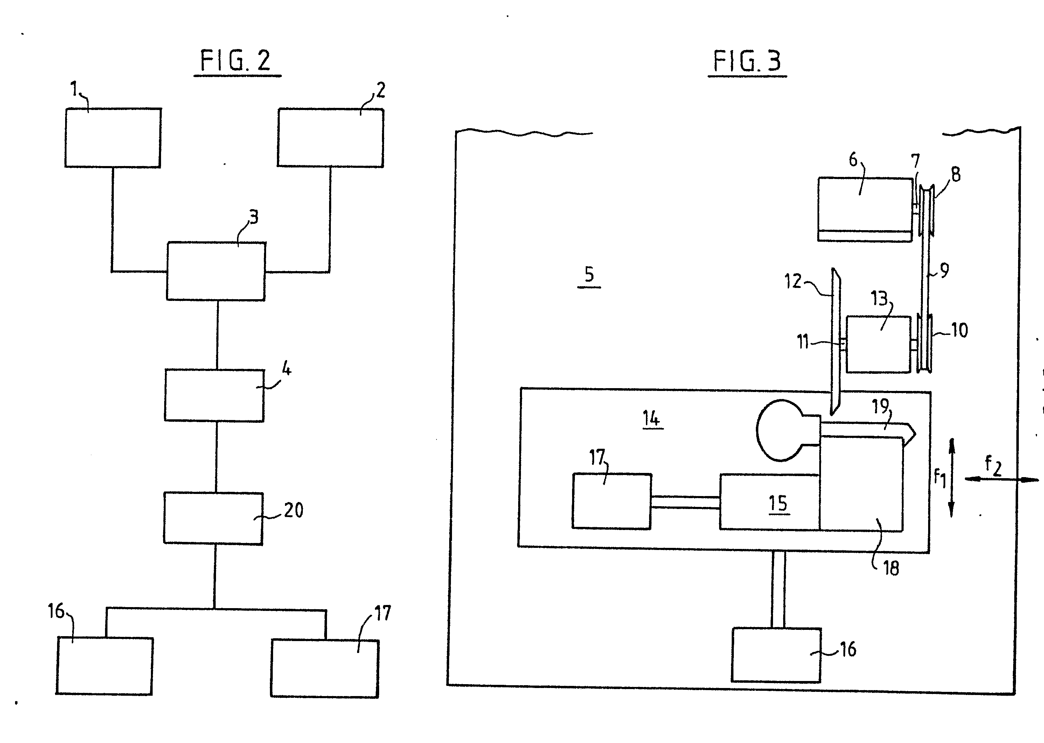

La Figure 2 est une schéma de la machine;

La Figure 3 en est une vue en plan.

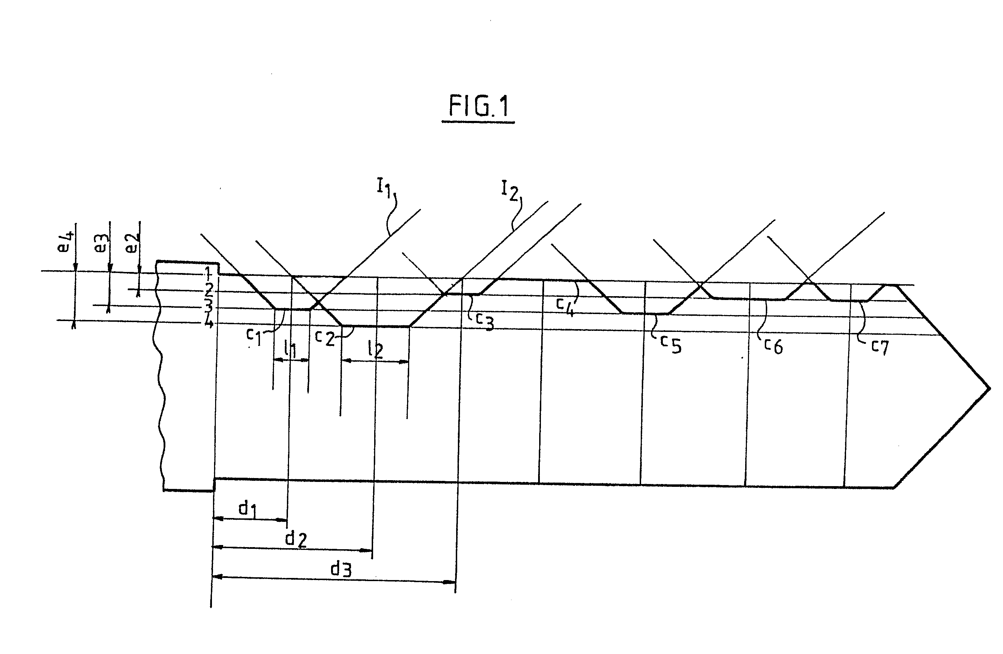

S'agissant par exemple de réaliser la clef représentée à la Figure 1 qui comporte une série de crans $c_1$, $c_2$, $c_3$... $c_7$ qui sont ici tous trapézoïdaux, mais dans laquelle les crans pairs sont plus larges que les crans impairs, on met dans une mémoire 1 les images $I_1$ et $I_2$ des différents crans, qui sont caractérisés par la largeur $I_1$ et $I_2$ de leur base et l'angle que font leurs côtés latéraux. Cet angle est ici le même pour les deux images, mais il pourrait être différent; les crans pourraient également avoir un fond non pas plat, mais arrondi. On met également en mémoire les distances telles que $d_1$, $d_2$, $d_3$, des différents crans à une même origine et les profondeurs telles que $e_2$, $e_3$, $e_4$ des différents numéros de cran.

Sur un tableau 2 on affiche le numéro de la clef à reproduire, qui est dans l'exemple représenté 3421322.

A l'aide d'un calculateur 3, on réalise, à partir des images $I_1$ et $I_2$, une superposition de ces images de façon que leur ensemble réalise la combinaison affichée; dans l'exemple de la Figure 1, on superpose l'image $I_1$ placée à une distance $d_1$ de l'origine de façon que son fond se trouve à une distance $e_3$ d'une ligne de référence, à une image $I_2$ placée à une distance $(d_2 - d_1)$ de l'origine de façon que son fond se trouve à une distance $e_4$ de la ligne de référence, à une image $I_1$ placée à une distance $(d_3 - d_2)$ de l'origine de façon que son fond se trouve à une distance $e_2$ de la ligne de référence, etc. On forme ainsi une image de la clef qui est mise dans une mémoire 4.

La machine utilisée pour la réalisation de la clef comprend un bâti 5 portant un moteur 6 sur l'arbre de sortie 7 duquel est calée une poulie 8. Celle-ci est reliée par une courroie 9 à une poulie 10 qui est calée sur un arbre 11 portant une fraise universelle 12 et montée à rotation dans un support 13 fixé au bâti 5.

- 4 -

0133091

Sur le bâti 3 est monté coulissant dans la direction de la flèche $f_1$, un chariot intermédiaire 14 sur lequel un deuxième chariot 15 peut coulisser dans la direction de la flèche $f_2$ perpendiculaire à la direction $f_1$. Un moteur 16 porté par le bâti 5 permet de déplacer le chariot 14, par exemple par l'intermédiaire d'un système vis-écrou et un moteur 17 porté par ce chariot permet de déplacer le chariot 15.

Le chariot 15 porte un étau 18 propre à maintenir une ébauche de clef 19. On voit qu'il est ainsi possible de déplacer le chariot 15 avec l'ébauche 19 qu'il porte, dans n'importe quelle direction par rapport à la fraise.

Un calculateur 20 détermine le contour de l'image de la clef se trouvant dans la mémoire 4 et commande les moteurs 16 et 17 de façon que la fraise 12 balaie de manière continue l'ébauche 19 en fonction de ce contour et reproduise ainsi la clef dont le numéro a été affiché.

Le calculateur peut commander les moteurs 16 et 17 de façon que l'ébauche se déplace suivant un trajet correspondant exactement au contour de la clef, c'est-à-dire déterminé par les intersections des différentes images des crans, comme représenté en traits pleins à la Figure 1. Mais, il peut également commander les moteurs 16 et 17 suivant un trajet correspondant aux intersections des différentes images avec une ligne de référence, comme représenté en traits mixtes, cette ligne étant ici celle correspondant au niveau "1" des crans.

On voit de la description qui précède que le fonctionnement de la machine est entièrement automatique, une fois le numéro de la clef affiché. Une même fraise 12 peut être utilisée quelle que soit la forme des crans.

Revendications

1. Procédé pour réaliser à l'aide d'une fraise universelle une clef dont on connaît le numéro ou code dans une ébauche fixée dans un étau porte-ébauche, caractérisé en ce qu'on met en mémoire la ou les images des différents crans que peuvent comporter les clefs à reproduire et les écarts entre ces crans, qu'à partir de cette ou ces images ainsi mises en mémoire, on réalise une superposition d'images de crans en nombre égal à celui des crans à former dans l'ébauche, la superposition étant effectuée en disposant ces images de crans en fonction de la combinaison à réaliser de façon que leur ensemble reproduise cette combinaison, qu'on met en mémoire l'image de la clef ainsi formée, et qu'on commande le déplacement relatif de la fraise et du porte-ébauche de façon à assurer un balayage continu de l'ébauche, en fonction du contour de l'image ainsi mise en mémoire.

2. Procédé selon la revendication 1, caractérisé en ce que le déplacement relatif de la fraise et du porte-ébauche est déterminé par les intersections des images des crans entre elles.

3. Procédé selon la revendication 1, caractérisé en ce que le déplacement relatif de la fraise et du porte-ébauche est déterminé par les intersections des différentes images avec une ligne de référence.

4. Machine pour la mise en oeuvre du procédé défini à la revendication 1 ou 2, qui comporte un bâti (5), un chariot intermédiaire (14) monté coulissant par rapport à ce bâti, dans une première direction ($f_1$), un chariot (15) monté coulissant sur le chariot intermédiaire dans une deuxième direction ($f_2$), un premier moteur (16) pour déplacer le chariot intermédiaire par rapport au bâti, un deuxième moteur (17) pour déplacer le chariot par rapport au chariot intermédiaire, un support de fraise (13) par rapport auquel une fraise (12) est montée à rotation, des moyens (6) pour entraîner la fraise et un porte-ébauche (18), l'un des éléments constitués par le support de fraise (13) et le porte-ébauche (18) étant porté par le bâti (5) et l'autre par le chariot (15), caractérisée en ce qu'elle comprend, en outre, une première mémoire électronique (1) de la ou des images des crans à former dans l'ébauche, des moyens (3) pour superposer une série d'images de crans en nombre égal à celui de ces crans de façon que leur ensemble reproduise la combinaison à réaliser, et forme l'image correspondante de la clef, une deuxième mémoire électronique (4) de l'image de la clef ainsi obtenue, et des moyens (20) pour commander les deux moteurs (16 et 17) en assurant un balayage continu de l'ébauche en fonction du contour de l'image ainsi réalisée.

FIG.1

FIG. 2

1

2

3

4

20

16

17

FIG. 3

6

7

8

5

9

12

13

11

10

14

19

17

15

18

$f_1$

$f_2$

16

## DOCUMENTS CONSIDERES COMME PERTINENTS

| Categorie | Citation du document avec indication en cas de besoin des parties pertinentes | Revendication concernee | CLASSEMENT DE LA DEMANDE (Int Cl ³) |
|---|---|---|---|
| X,D | US-A-4 188 163 (JUSKEVIC) <br> * colonne 3, ligne 23 - colonne 4, ligne 10; figures * | 1 | B 23 C 3/35 |
| X | FR-A-2 362 694 (NEIMAN) <br> * page 3, ligne 23 - page 4, ligne 21; figures * | 1 | |
| X | DE-A-2 951 065 (F.I.M.A.T.) <br> * page 1, ligne 1 - page 2, ligne 1; figures * | 1 | |
| X | FR-A-2 410 527 (KIS-FRANCE) <br> * page 4, ligne 28 - page 5, ligne 20; figures * | 1 | |
| X | US-A-4 256 423 (JUSKEVIC) <br> * colonne 3, lignes 6-64; figures * | 1 | DOMAINES TECHNIQUES RECHERCHES (Int. Cl ³) <br><br> B 23 C 3/00 |
| X | US-A-4 251 173 (SAUCEDO) <br> * colonne 2, ligne 14 - colonne 3, ligne 32; figures * | 1 | |
| X | FR-A-1 016 100 (BOYER) <br> * page 1, colonne de gauche, ligne 18 - colonne de droite, ligne 13; figures * | 1 | |

--- -/-

Le présent rapport de recherche a été établi pour toutes les revendications

| Lieu de la recherche <br> LA HAYE | Date d'achèvement de la recherche <br> 05-10-1984 | Examinateur <br> HORVATH R.C. |
|---|---|---|

| Office européen des brevets | **RAPPORT DE RECHERCHE EUROPEENNE** | |
|---|---|---|

## DOCUMENTS CONSIDERES COMME PERTINENTS     Page 2

| Categorie | Citation du document avec indication en cas de besoin des parties pertinentes | Revendication concernée | CLASSEMENT DE LA DEMANDE (Int. Cl ³) |
|---|---|---|---|
| X | US-A-3 118 346 (SIMON) <br> * colonne 2, ligne 23 - colonne 3, ligne 32; figures * <br><br> --- | 1 | |
| X | US-A-3 919 920 (SCHLAGE) <br> * colonne 5, ligne 47 - colonne 6, ligne 8; figures * <br><br> ----- | 1 | |

DOMAINES TECHNIQUES RECHERCHES (Int. Cl ³)

Le present rapport de recherche a ete etabli pour toutes les revendications

| Lieu de la recherche | Date d'achèvement de la recherche | Examinateur |
|---|---|---|
| LA HAYE | 05-10-1984 | HORVATH R.C. |

CATEGORIE DES DOCUMENTS CITES

X : particulièrement pertinent à lui seul
Y : particulièrement pertinent en combinaison avec un autre document de la même categorie
A : arriere-plan technologique
O : divulgation non-ecrite
P : document intercalaire

T : theorie ou principe à la base de l'invention
E : document de brevet antérieur, mais publié à la date de depôt ou après cette date
D : cité dans la demande
L : cité pour d'autres raisons

& : membre de la même famille, document correspondant